# EUROPÄISCHE PATENTSCHRIFT

(11) **EP 1 399 494 B1**
(45) Veröffentlichungstag und Bekanntmachung des Hinweises auf die Patenterteilung: **28.03.2007**
(21) Anmeldenummer: 02748693.5
(22) Anmeldetag: 07.05.2002
(51) Int. Cl.: C08G 18/02, C08G 18/79, C07D 229/00

(54) **VERFAHREN ZUR DIMERISIERUNG VON ISOPHORONDIISOCYANAT**
METHOD FOR THE DIMERISATION OF ISOPHORONE DIISOCYANATE
PROCEDE DE DIMERISATION DE DIISOCYANATE D'ISOPHORONE

(30) Priorität: 14.05.2001 DE 10123417
(43) Veröffentlichungstag der Anmeldung: 24.03.2004
(73) Patentinhaber: Bayer MaterialScience AG, 51368 Leverkusen (DE)
(72) Erfinder: LAAS, Hans-Josef, 51467 Bergisch Gladbach (DE); HALPAAP, Reinhard, 51519 Odenthal (DE); RICHTER, Frank, 51373 Leverkusen (DE); KÖCHER, Jürgen, 40764 Langenfeld (DE)
(86) Internationale Anmeldenummer: PCT/EP2002/005001
(87) Internationale Veröffentlichungsnummer: WO 2002/092657

(56) Entgegenhaltungen:
- EP-A- 0 780 377
- EP-A- 0 896 973
- BE-A- 659 576
- FR-A- 1 361 664

## Beschreibung

Die Erfindung betrifft ein neues Verfahren zur Dimerisierung von Isophorondiisocyanat. Die nach diesem Verfahren hergestellten Uretdionpolyisocyanate können als Ausgangskomponente für Polyurethankunststoffe, insbesondere als Isocyanatkomponente zur Herstellung von Uretdionpulverlackvernetzern verwendet werden.

Die Herstellung von Polyisocyanaten mit Uretdionstruktur durch katalytische Dimerisierung und gegebenenfalls gleichzeitige Trimerisierung monomerer aliphatischer oder cycloaliphatischer Diisocyanate ist bekannt. Ein umfassender Überblick über die technisch relevanten Dimerisierungsverfahren des Standes der Technik und die dabei zum Einsatz gelangenden Katalysatoren bzw. Katalysatorsysteme findet sich in J. prakt. Chem. 336 (1994) 185 - 200.

Unter den lichtechten Uretdionpolyisocyanaten spielen die linearen, d.h. Isocyanuratgruppen-freien Dimerisate des 1-Isocyanato-3,3,5-trimethyl-5-isocyanatomethylcyclohexans (Isophorondiisocyanat; IPDI) eine besondere Rolle. Sie dienen z.B. als bevorzugte Ausgangskomponenten zur Herstellung blockierungsmittelfreier Polyurethan(PUR)-Pulverlackvemetzer (z.B. EP-A 45 996, EP-A 639 598 oder EP-A 669 353). Die nach der Mehrzahl der bekannten Verfahren aus IPDI erhältlichen Uretdionpolyisocyanate weisen aber in Abhängigkeit vom verwendeten Katalysatortyp mehr oder weniger hohe Trimerisat-Anteile auf. Zur Zeit sind lediglich zwei Katalysatorsysteme bekannt, unter deren Einsatz praktisch lineare IPDI-Dimerisate erhalten werden können, die als Ausgangskomponenten für Uretdionpulverlackvemetzer benötigt werden.

Die EP-A 45 995 beschreibt die Verwendung spezieller peralkylierter Aminophosphine als Katalysatoren zur selektiven Dimerisierung von IPDI. Der bevorzugt eingesetzte Dimerisierungskatalysator Hexamethylphosphorigsäuretriamid (Tris-(dimethylamino)-phosphin) gestattet die Herstellung reiner IPDI-Uretdione mit Trimerisatanteilen < 2 Gew.-%. Der gravierende Nachteil des Verfahrens liegt in der hohen Oxidationsempfindlichkeit der Aminophosphine, die dazu führt, dass beispielsweise Hexamethylphosphorigsäuretriamid in Gegenwart von Luftsauerstoff spontan zum Hexamethylphosphorsäuretriamid (HMPT), einer Verbindung mit bekanntermaßen hohem krebserzeugenden Potential, reagiert. Diese im technischen Maßstab nicht völlig auszuschließende Nebenreaktion schränkt die praktische Anwendung aus arbeitshygienischen Gründen stark ein.

Die EP-A 317 744 beschreibt ein Verfahren zur Herstellung linearer (cyclo)aliphatischer Uretdione durch Katalyse mit 4-Dialkylaminopyridinen, wie z.B. 4-Dimethylaminopyridin (DMAP). Auch dieses Verfahren liefert lineare, nahezu Isocyanuratgruppen-freie IPDI-Uretdione, die allerdings eine sehr hohe Eigenfarbe aufweisen. Durch Mitverwendung von Phosphin- oder Phosphitstabilisatoren bei der DMAPkatalysierten Dimerisierung lässt sich nach EP-A 735 027 bzw. EP-A 896 973 die Farbqualität zwar verbessern, für spezielle Anwendungen, beispielsweise zur Herstellung von Uretdionpulverlackvernetzern für Polyurethan-Pulverklarlacke, reicht diese jedoch häufig noch nicht aus.

Beide Katalysatorsysteme, sowohl die Aminophosphine der EP-A 45 995 als auch die Dialkylaminopyridine der EP-A 317 744, besitzen darüberhinaus den gemeinsamen Nachteil einer nur mäßigen katalytischen Aktivität gegenüber IPDI. Für eine ausreichend rasche Umsetzung ist der Einsatz hoher Katalysatorkonzentrationen von bis zu 2 Gew.-% erforderlich.

Aufgabe der vorliegenden Erfindung war es daher, ein neues Verfahren zur Herstellung von Uretdionpolyisocyanaten zur Verfügung zu stellen, das unter Verwendung hochreaktiver und selektiver Katalysatoren möglichst lineare, vorzugsweise isocyanuratfreie farbhelle Produkte liefert.

Diese Aufgabe konnte nun durch die Bereitstellung des erfindungsgemäßen Verfahrens gelöst werden.

Gegenstand der vorliegenden Erfindung ist ein Verfahren zur Herstellung Uretdiongruppen aufweisender Polyisocyanate durch Oligomerisierung eines Teils der Isocyanatgruppen von Isophorondiisocyanat in Gegenwart von die Dimerisierung von Isocyanatgruppen beschleunigenden Katalysatoren, gegebenenfalls Abbruch der Oligomerisierungsreaktion bei einem definierten Oligomerisierungsgrad durch Zusatz eines Katalysatorgiftes und gegebenenfalls Entfernung des nicht umgesetzten Diisocyanatüberschusses durch Extraktion oder Dünnschichtdestillation, dadurch gekennzeichnet, dass man als Oligomerisierungskatalysatoren salzartige Verbindungen einsetzt, die im Anion von 10 bis 97,1 Gew.-% 1,2,3- und/oder 1,2,4-Triazolatstrukturen (berechnet als C₂N₃; Molekulargewicht = 66) enthalten.

Die nach diesem Verfahren hergestellten Uretdionpolyisocyanate können als Ausgangskomponente für Polyurethankunststoffe, insbesondere als Isocyanatkomponente zur Herstellung von Uretdionpulverlackvernetzern verwendet werden.

Das beim erfindungsgemäßen Verfahren eingesetzte Isophorondiisocyanat kann nach unterschiedlichsten Verfahren, z.B. durch Phosgenierung oder auf phosgenfreiem Weg, beispielsweise durch Urethanspaltung, hergestellt werden.

Als Oligomerisierungskatalysatoren kommen beim erfindungsgemäßen Verfahren salzartige Verbindungen zum Einsatz, die im Anion 10 bis 97,1 Gew.-% 1,2,3-und/oder 1,2,4-Triazolatstrukturen (berechnet als C₂N₃; Molekulargewicht = 66) enthalten. Hierbei handelt es sich um Verbindungen, die im Anion Triazolatstrukturen der allgemeinen Formeln (I) und/oder (II) 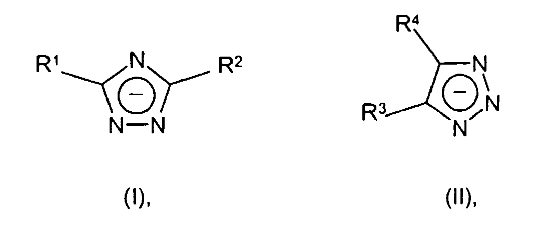 enthalten, in welchen
- R¹, R², R³ und R⁴: für gleiche oder verschiedenen Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 20 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten,
und wobei
- R³ und R⁴: in Formel (II) auch in Kombination untereinander zusammen mit den Kohlenstoffatomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

Bevorzugte Oligomerisierunskatalysatoren sind solche, die im Anion Triazolatstrukturen der allgemeinen Formel (I) enthalten, in welcher
- R¹ und R²: für gleiche oder verschiedenen Reste stehen und jeweils ein Wasserstoffatom, ein Halogenatom aus der Reihe Fluor, Chlor oder Brom oder eine Nitrogruppe, einen gesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten.

Als Oligomerisierungskatalysatoren ebenfalls bevorzugt sind solche, die im Anion Triazolatstrukturen der allgemeinen Formel (II) enthalten, in welcher
- R³ und R⁴: für gleiche oder verschiedenen Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten, und auch in Kombination untereinander zusammen mit den Kohlenstoffatomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

Besonders bevorzugte Oligomerisierunskatalysatoren für das erfindungsgemäße Verfahren sind Salze des 1,2,4-Triazols, des 1,2,3-Triazols und/oder des 1,2,3-Benztriazols.

Als Gegenionen zu den katalytisch aktiven Triazolat-Anionen können die erfindungsgemäß einzusetzenden Katalysatoren die unterschiedlichsten Kationen enthalten. Beispielhaft seien hier genannt Alkalikationen wie Li⁺, Na⁺ und K⁺, Erdalkalikationen wie Mg²⁺ und Ca²⁺ sowie Ammonium- oder Phosphoniumkationen, der allgemeinen Formel (III), 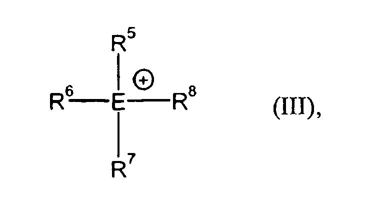 in welcher
- E: für Stickstoff (N) oder Phosphor (P) steht,
- R⁵, R⁶, R⁷ und R⁸: für gleiche oder verschiedenen Reste stehen und jeweils ein Wasserstoffatom, einen gesättigten oder ungesättigten aliphatischen oder cycloaliphatischen, einen gegebenenfalls substituierten aromatischen oder araliphatischen Rest, der bis zu 24 Kohlenstoffatome und gegebenenfalls bis zu 3 Heteroatome aus der Reihe Sauerstoff, Schwefel, Stickstoff enthalten und gegebenenfalls durch Halogenatome oder Hydroxygruppen substituiert sein kann, bedeuten, und wobei
- R⁸: auch für einen Rest der Formel (IV) 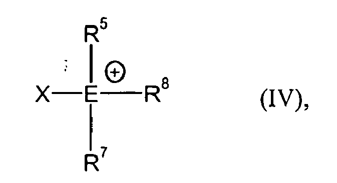
stehen kann, in welchem
- X: einen zweibindigen, gegebenenfalls substituierten aliphatischen, cycloaliphatischen, araliphatischen oder Aromatischen Rest mit bis zu 12 Kohlenstoffatomen bedeutet und
- R⁵, R⁶, R⁷ und E: die oben angegebene Bedeutung haben.

Bevorzugte Kationen sind Alkaliionen oder einwertige Ammonium- oder Phosphoniumkationen, der allgemeinen Formel (III), in welcher
- E: für Stickstoff oder Phosphor steht und
- R⁵, R⁶, R⁷ und R⁸: für gleiche oder verschiedenen Reste stehen und jeweils einen gesättigten aliphatischen oder cycloaliphatischen, einen gegebenenfalls substituierten aromatischen oder araliphatischen Rest mit bis zu 18 Kohlenstoffatome bedeuten.

Die beim erfindungsgemäßen Verfahren als Oligomerisierungskatalysatoren eingesetzten salzartigen Verbindungen sind zum Teil, z.B. in Form ihrer Natriumsalze, kommerziell erhältlich, ansonsten, wie die Ausführungsbeispiele belegen, nach gängigen Labormethoden leicht zugänglich.

Diese Katalysatoren kommen beim erfindungsgemäßen Verfahren in Mengen von 0,01 bis 3 Gew.-%, vorzugsweise 0,1 bis 1 Gew.-%, bezogen auf die Menge an eingesetztem IPDI, zum Einsatz. Die Zugabe zum Reaktionsgemisch kann in Substanz erfolgen; vorzugsweise werden die Katalysatoren jedoch in einem geeigneten organischen Lösungsmittel gelöst eingesetzt. Der Verdünnungsgrad der Katalysatorlösungen kann dabei innerhalb eines sehr breiten Bereichs frei gewählt werden. Katalytisch wirksam sind Lösungen ab einer Konzentration von 0,01 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyletheracetat, 1-Methoxypropyl-2-acetat, 3-Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lösungsmittel wie N-Methylpyrrolidon und N-Methyleaprolactam, 1,2-Propylencarbonat, Methylenchlorid, Dimethylsulfoxid, Triethylphosphat oder beliebige Gemische derartiger Lösungsmittel.

Bevorzugt kommen beim erfindungsgemäßen Verfahren jedoch Katalysatorlösungsmittel zum Einsatz, die gegenüber Isocyanaten reaktive Gruppen tragen und im Reaktionsprodukt eingebaut werden. Beispiele für solche Lösungsmittel sind ein- oder mehrwertige einfache Alkohole, wie z.B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether Diethylengylkolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Gegebenenfalls wird die Oligomerisierungsreaktion beim erfindungsgemäßen Verfahren beim gewünschten Umsatzgrad, beispielsweise wenn 10 bis 60 % der ursprünglich im Ausgangsgemisch vorliegenden Isocyanatgruppen abreagiert haben, mit Hilfe geeigneter Katalysatorgifte abgebrochen. Solche Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Abstoppung der Reaktion benötigte Menge des Katalysatorgiftes richtet sich dabei nach der Menge des verwendeten Katalysators; im allgemeinen wird eine äquivalente Menge des Abstoppers, bezogen auf den zu Beginn eingesetzten Oligomerisierungskatalysator, eingesetzt. Berücksichtigt man allerdings eventuell während der Reaktion auftretende Katalysatorverluste, so können zur Reaktionsstoppung auch schon 20 bis 80 Äquivalent-% des Katalysatorgiftes, bezogen auf die ursprünglich eingesetzte Katalysatormenge, ausreichen.

Obwohl im allgemeinen nicht erforderlich, können beim erfindungsgemäßen Verfahren gegebenenfalls in der Polyurethanchemie übliche Additive als Stabilisatoren mitverwendet werden. Hierbei handelt es sich beispielsweise um phenolische Antioxidantien, wie z.B. 2,6-Di-tert.-butyl-4-methylphenol, 2,4,6-Tri-tert.-butylphenol und 3,5-Di-tert.-butyl-4-hydroxyanisol, oder mit Alkyl- und/oder Arylresten trisubstituierte Phosphitstabilisatoren, wie z.B. Triphenylphosphit, Tris(nonylphenyl)phosphit, Diphenyl-isooctylphosphit, Diphenylisodecylphosphit, Diisodecylphenylphosphit, Diisooctyl-octylphenylphosphit, Phenylneopentylglykolphosphit, 2,4,6-Tri-tert.-butylphenyl-(2-butyl-2-ethyl-1,3-propandiol)phosphit, Triisodecylphosphit, Trilaurylphosphit, Tris(tridecyl)phosphit, Diisodecyl-pentaerythritdiphosphit, Distearyl-pentaerythritdiphosphit, Bis(2,4-di-tert.-butyl-phenyl)-pentaerythritdiphosphit und Tetraphenyl-dipropylenglykoldiphosphit oder beliebige Gemische solcher Additive.

Diese Additive werden gegebenenfalls dem Reaktionsgemisch in einer Menge von bis zu 5 Gew.-%, vorzugsweise bis zu 3 Gew.-%, bezogen auf die Menge an eingesetztem IPDI, zugesetzt.

In einer besonderen Ausführungsform des erfindungsgemäßen Verfahrens dienen bei Raumtemperatur flüssige Additive der genannten Art, vorzugsweise die genannten flüssigen Phosphitstabilisatoren als Lösungsmittel für die eingesetzten Katalysatoren.

Das erfindungsgemäße Verfahren wird, abgesehen von gegebenenfalls mitverwendeten Katalysatorlösungsmitteln, vorzugsweise in Substanz durchgeführt. Es kann aber auch, wenn gewünscht, in Gegenwart weiterer Mengen von gegenüber Isocyanatgruppen inerten Lösungsmitteln durchgerührt werden. Geeignet sind beispielsweise die bereits oben als mögliche Katalysatorlösungsmittel beschriebenen nichtreaktiven Lösungsmittel oder Gemische dieser Lösungsmittel, die gegebenenfalls in einer Menge von bis zu 80 Gew.-%, bezogen auf die Gesamtmenge an IPDI und zugesetztem Lösungsmittel, mitverwendet werden können.

Zur Durchführung des erfindungsgemäßen Verfahrens wird IPDI gegebenenfalls unter Inertgas wie beispielsweise Stickstoff, gegebenenfalls in Gegenwart eines geeigneten Lösungsmittels und gegebenenfalls eines Stabilisators der genannten Art bei einer Temperatur von 0 bis 100°C, vorzugsweise 20 bis 60°C vorgelegt. Dann wird ein Oligomerisierungskatalysator bzw. eine Lösung eines Oligomerisierungskatalysators der oben genannten Art in der oben angegebenen Menge zugegeben und die Reaktionstemperatur gegebenenfalls durch eine geeignete Maßnahme (Heizen oder Kühlen) auf eine Temperatur von 20 bis 100°C, vorzugsweise von 25 bis 80°C eingestellt. Die Umsetzung kann gegebenenfalls bei Erreichen eines definierten Oligomerisierungsgrades von 10 bis 60 Gew.-%, vorzugsweise 10 bis 40 Gew.-% durch Zugabe eines Katalysatorgiftes der beispielhaft genannten Art und gegebenenfalls nachfolgendes kurzzeitiges Erhitzen der Reaktionsmischung beispielsweise auf eine oberhalb 80°C liegende Temperatur beendet werden. Unter "Oligomerisierungsgrad" ist dabei der Prozentsatz der in der Ausgangsmischung ursprünglich vorhandenen Isocyanatgruppen zu verstehen, der während der erfindungsgemäßen Umsetzung (insbesondere durch Dimerisierung, daneben unter Trimerisierung und im Falle der Mitverwendung der beschriebenen, beispielsweise alkoholischen Katalysatorlösungsmittel durch Reaktion mit Isocyanatgruppen beispielsweise unter Urethanisierung) verbraucht wird. Der genannte Oligomerisierungsgrad wird im allgemeinen nach einer Reaktionszeit von 30 Minuten bis 8 Stunden, vorzugsweise 1 bis 6 Stunden erreicht.

Vorzugsweise wird das Reaktionsgemisch anschließend vorzugsweise durch Dünnschichtdestillation im Hochvakuum unter möglichst schonenden Bedingungen, beispielsweise bei einer Temperatur von 120 bis 200°C, vorzugsweise von 140 bis 180°C, von flüchtigen Bestandteilen (überschüssigem monomerem IPDI und gegebenenfalls mitverwendeten nichtreaktiven Lösungsmitteln und Stabilisatoren) befreit.

In einer weiteren Ausführungsform des erfindungsgemäßen Verfahrens werden die genannten flüchtigen Bestandteile z.B. durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Erfindungsgemäß erhält man farbhelle oder nahezu farblose, hochviskose Uretdiongruppen aufweisende IPDI-Polyisocyanate, deren Gehalt an Isocyanatgruppen in Abhängigkeit vom Oligomerisierungsgrad 16,0 bis 19,0 Gew.-%, vorzugsweise von 16,7 bis 17,9 Gew.-%, beträgt und die weniger als 5 Gew.-%, vorzugsweise weniger als 2 Gew.-%, besonders bevorzugt weniger als 1 Gew.-% an monomerem IPDI enthalten. Der molare Anteil an Isocyanuratstrukturen in den erfindungsgemäßen Verfahrensprodukten beträgt bezogen auf die Summe an Uretdion- und Isocyanuratgruppen vorzugsweise maximal 10 %, besonders bevorzugt maximal 8 % und ganz besonders bevorzugt maximal 5 %.

Die anfallenden Destillate, die neben dem nicht umgesetzten monomeren IPDI gegebenenfalls mitverwendete Lösungsmittel und Stabilisatoren sowie bei Verzicht auf den Einsatz eines Katalysatorgiftes gegebenenfalls aktiven Katalysator enthalten, können problemlos zur erneuten Oligomerisierung verwendet werden.

Gegebenenfalls kann beim erfindungsgemäßen Verfahren nach anteiliger katalytischer Oligomerisierung und Abbruch der Reaktion beim angestrebten Oligomerisierungsgrad durch Zugabe eines Katalysatorgiftes auch auf die Abtrennung des überschüssigen, nicht umgesetzten IPDI verzichtet werden. In diesem Fall erhält man als Verfahrensprodukte farbhelle Lösungen des IPDI- Polyisocyanats in bis zu 70 Gew.-% monomerem IPDI.

Das erfindungsgemäße Verfahren gestattet auf einfache Weise unter Verwendung sehr geringer Konzentrationen toxikologisch unbedenklicher Katalysatoren innerhalb sehr kurzer Reaktionszeiten die Herstellung von IPDI-Uretdionen, die sich gegenüber den nach den bisher bekannten Verfahren erhältlichen IPDI-Uretdionen durch unerreicht niedrige Farbzahlen auszeichnen.

Die erfindungsgemäß hergestellten IPDI-Uretdione bzw. deren Lösungen in monomerem IPDI stellen aufgrund ihrer Eigenschaften besonders wertvolle Ausgangsmaterialien zur Herstellung von Polyurethankunststoffen nach dem Polyadditionsverfahren, bevorzugt zur Herstellung von Ein- oder Zweikomponenten-Polyurethanlacken, dar. Sie können dabei auch in mit aus der Polyurethanchemie an sich bekannten Blockierungsmitteln blockierter Form als Vernetzerkomponenten für Einkomponenten-Einbrennläcke eingesetzt werden. Geeignete Blockierungsmittel sind beispielsweise die aus der Polyurethanchemie als Blockierungsmittel für Isocyanatgruppen bekannten Oxime, wie z.B. Acetonoxim, Butanonoxim und Cyclohexanonoxim, Lactame, wie z. B. ε-Caprolactam, C-H-aziden Verbindungen, wie z.B. Malonsäurediethylester und Acetessigester, N-Heterocyclen, wie z.B. 1,2,4-Triazol, Dimethyl-1,2,4-triazol, 3,5-Dimethylpyrazol und Imidazol sowie beliebige Gemische dieser Blockierungsmittel.

Die nach dem erfindungsgemäßen Verfahren erhältlichen IPDI-Uretdione eignen sich insbesondere als Ausgangskomponenten zur Herstellung von Uretdionpulverlackvernetzern.

### Beispiele

Alle Prozentangaben beziehen sich, soweit nichts anderslautendes vermerkt, auf das Gewicht.

### Herstellung der Katalysatoren

### Katalysator 1: Natrium-1,2,4-triazolat

In einer Dreihalskolben-Rührapparatur mit mechanischem Rührer, Innenthermometer und Rückflusskühler werden 200 ml trockenes Methanol und 48 ml einer 30 %igen methanolischen Lösung von Natrium-Methanolat, entsprechend 0,25 mol Natrium-Methanolat, unter trockenem Stickstoff vorgelegt. Hierzu gibt man bei Raumtemperatur portionsweise 17,4 g (0,25 mol) 1,2,4-Triazol. Nach beendeter Zugabe des 1,2,4-Triazols wird die Reaktionsmischung 4 h bei Rückflusstemperatur gerührt. Anschließend wird das Lösungsmittel bei vermindertem Druck abdestilliert und der verbleibende ölige Rückstand bei Raumtemperatur mit 200 ml Methylenchlorid versetzt. Man rührt 15 min bei Raumtemperatur und filtriert das als Feststoff ausgefallene Produkt ab. Man erhält 22,5 g Natrium-1,2,4-triazolat (Ausbeute: 98 %) in Form eines farblosen Pulvers. Das Produkt ist ¹H-NMR-spektroskopisch rein und frei von eingesetztem 1,2,4-Triazol.

### Katalysator 2: Natrium-1,2,3-triazolat

17,4 g (0,25 mol) 1,2,3-Triazol werden nach dem für Katalysator 1 beschriebenen Verfahren in 200 ml Methanol mit einer äquivalenten Menge methanolischer Natrium-Methanolat-Lösung umgesetzt. Das Reaktionsgemisch wird wie beschrieben aufgearbeitet und man erhält 22,4 g Natrium-1,2,3-triazolat (Ausbeute: 98 %) in Form eines praktisch farblosen Pulvers. Das Produkt ist laut ¹H-NMR-Spektrum rein und frei von Edukt.

### Katalysator 3: Natrium-Benztriazolat

29,8 g (0,25 mol) Benztriazol werden nach dem für Katalysator 1 beschriebenen Verfahren in 200 ml Methanol mit einer äquivalenten Menge methanolischer Natrium-Methanolat-Lösung umgesetzt. Das Reaktionsgemisch wird wie beschrieben aufgearbeitet und man erhält 34,2 g Natrium-Benztriazolat (Ausbeute: 97 %) in Form eines praktisch farblosen Pulvers. Das Produkt ist laut ¹H-NMR-Spektrum rein und frei von Edukt.

### Katalysator 4: Tetrabutylphosphonium-1,2,4-triazolat

In einer Dreihalskolben-Rührapparatur mit mechanischem Rührer, Innenthermometer und Rückflusskühler werden bei Raumtemperatur unter trockenem Stickstoff 18,0 g einer 30%igen methanolischen Natriummethanolat-Lösung, entsprechend 0,1 mol Natrium-Methanolat, vorgelegt. Man tropft innerhalb von 20 min eine Lösung von 6,9 g (0,1 mol) 1,2,4-Triazol in 20 ml Methanol zu, rührt das Reaktionsgemisch eine Stunde nach und gibt anschließend innerhalb von 20 min 41,3 g (0,1 mol) einer 71,4%igen Lösung von Tetrabutylphosphoniumchlorid in Isopropanol (Cyphos^{®} 443P, Fa. Cytec) zu. Unmittelbar nach Beginn der Phosphoniumsalz-Zugabe setzt die Ausscheidung von Natriumchlorid ein. Man rührt die Reaktionsmischung eine weitere Stunde bei Zimmertemperatur nach, filtriert und engt schließlich am Rotationsverdampfer bei einer Badtemperatur von 40°C und einem Druck von ca. 1 mbar bis auf eine Menge von ca. 50 ml ein. Der Rückstand wird erneut filtriert und man erhält 42,5 g einer klaren, nahezu farblosen Lösung von Tetrabutylphosphonium-1,2,4-triazolat in einem Methanol/Isopropanol-Gemisch. Der Gehalt an aktivem Katalysator beträgt nach acidimetrischer Titration mit 0,1 n HCl gegen Phenolphthalein 73,0 %, das gaschromatografisch (GC) bestimmte Verhältnis von Methanol zu Isopropanol beträgt 25,4 : 74,6 % (Flächen-%).

### Katalysator 5: Tetrabutylphosphonium-1,2,3-triazolat

Nach dem für Katalysator 4 beschriebenen Verfahren wurden 6,9 g (0,1 mol) 1,2,3-Triazol über die Zwischenstufe des Natriumsalzes mit einer äquivalenten Menge der in Beispiel 4 beschriebenen Lösung von Tetrabutylphosphoniumchlorid in Isopropanol umgesetzt. Nach Einengen am Rotationsverdampfer und Filtration erhält man 48,1 g einer klaren, nahezu farblosen Lösung von Tetrabutylphosphonium-1,2,3-triazolat in einem Methanol/Isopropanol-Gemisch. Der Gehalt an aktivem Katalysator beträgt nach acidimetrischer Titration mit 0,1 n HCl 66,3 %, das Verhältnis von Methanol zu Isopropanol beträgt nach GC 35,2 : 64,8 % (Flächen-%).

### Katalysator 6: Tetrabutylphosphonium-Benztriazolat

Nach dem für Katalysator 4 beschriebenen Verfahren wurden 11,9 g (0,1 mol) Benztriazol über die Zwischenstufe des Natriumsalzes mit einer äquivalenten Menge der in Beispiel 4 beschriebenen Lösung von Tetrabutylphosphoniumchlorid in Isopropanol umgesetzt. Nach Einengen am Rotationsverdampfer und Filtration erhält man 52,1 g einer klaren, schwach gelben Lösung von Tetrabutylphosphonium-Benztriazolat in einem Methanol/Isopropanol-Gemisch. Der Gehalt an aktivem Katalysator beträgt nach acidimetrischer Titration mit 0,1 n HCl 69,7 %, das Verhältnis von Methanol zu Isopropanol beträgt nach GC 31,6 : 68,4 % (Flächen-%).

### Katalysator 7: Benzyltriethylammonium-1,2,4-triazolat

Nach dem für Katalysator 4 beschriebenen Verfahren wurden 6,9 g (0,1 mol) 1,2,4-Triazol gelöst in 20 g Methanol zuerst mit 18,0 g (0,1 mol) 30%iger methanolischer Natriummethanolat-Lösung und anschließend mit 90,8 g einer 25 %igen Lösung von Benzyltriethylammoniumchlorid in 2-Ethylhexanol, entsprechend 0,1 mol Benzyltriethylammoniumchlorid, umgesetzt. Nach Einengen am Rotationsverdampfer und Filtration erhält nach Filtration 94,1 g einer klaren, schwach gelben Lösung von Benzyltriethylammonium-1,2,4-triazolat in einem Methanol/2-Ethylhexanol-Gemisch. Der Gehalt an aktivem Katalysator beträgt nach acidimetrischer Titration mit 0,1 n HCl 26,5 %, das Verhältnis von Methanol zu 2-Ethylhexanol beträgt nach GC 5,0 : 95,0 % (Flächen-%).

### Katalysator 8: Methyltrioctylammonium-1,2,4-triazolat

Nach dem für Katalysator 4 beschriebenen Verfahren wurden 6,9 g (0,1 mol) 1,2,4-Triazol gelöst in 20 g Methanol zuerst mit 18,0 g (0,1 mol) 30%iger methanolischer Natriummethanolat-Lösung und anschließend mit 80,6 g einer 50 %igen Lösung von Methyltrioctylammoniumchlorid (Aliquat 336) in Methanol, entsprechend 0,1 mol Methyltrioctylammoniumchlorid, umgesetzt. Nach Filtration, Entfernen des Lösungsmittels am Rotationsverdampfer und erneuter Filtration erhält man 40,3 g Methyltrioctylammonium-1,2,4-triazolat als klare, hellgelbe Flüssigkeit. Der Gehalt an aktivem Katalysator beträgt nach acidimetrischer Titration mit 0,1 n HCl 92,3 %.

### Beispiel 1

1000 g (4,50 mol) Isophorondiisocyanat (IPDI) werden bei 40°C unter trockenem Stickstoff und Rühren mit einer Lösung von 2 g (0,022 mol) Natrium-1,2,4-triazolat (Katalysator 1) in 25 ml Dimethylsulfoxid (DMSO) versetzt, worauf die Temperatur des Reaktionsgemisches aufgrund der freiwerdenden Reaktionswärme bis auf 43°C ansteigt. Nach einer Reaktionszeit von 45 Minuten, während der die Exothermie wieder abklingt, ist der NCO-Gehalt der Reaktionsmischung auf einen Wert von 29,4 %, entsprechend einem Oligomerisierungsgrad von 20,1 %, abgesunken. Der Katalysator wird nun durch Zugabe von 4,6 g (0,022 mol) Dibutylphosphat deaktiviert. Die dabei entstehende Trübung wird abfiltriert und die klare, farblose Reaktionsmischung mit Hilfe eines Dünnschichtverdampfers bei einer Temperatur von 160°C und einem Druck von 0,3 mbar von flüchtigen Bestandteilen (überschüssigem Diisocyanat und Katalysatorlösungsmittel) befreit. Man erhält ein farbloses Uretdionpolyisocyanat mit einem Gehalt an freien NCO-Gruppen von 17,6 %, einem Gehalt an monomerem IPDI von 0,3 %, einer Viskosität (nach DIN 53 018) von mehr als 200000 mPas (23°C) und einer Farbzahl (APHA), bestimmt an einer 10 %-igen Lösung in Methylenchlorid, von 8. Das molare Verhältnis von Uretdion- zu Isocyanuratstrukturen beträgt nach ¹³C-NMR-Spektroskopie 96,2 : 3,8.

### Beispiel 2

1000 g (4,50 mol) Isophorondiisocyanat (IPDI) werden bei 40°C unter trockenem Stickstoff und Rühren mit einer Lösung von 1,2 g (0,013 mol) Natrium-1,2,3-triazolat (Katalysator 2) in 15 ml Dimethylsulfoxid (DMSO) versetzt, wobei sich das Reaktionsgemisch leicht auf ca. 42°C erwärmt. Nach einer Reaktionszeit von 2 Stunden ist der NCO-Gehalt der Reaktionsmischung auf einen Wert von 29,4 %, entsprechend einem Oligomerisierungsgrad von 20,1 %, abgesunken. Der Katalysator wird nun durch Zugabe von 4,6 g (0,022 mol) Dibutylphosphat deaktiviert. Die dabei entstehende Trübung wird abfiltriert und die klare, farblose Reaktionsmischung wie in Beispiel 1 beschrieben von flüchtigen Bestandteilen (überschüssigem Diisocyanat und Katalysatorlösungsmittel) befreit. Man erhält ein hochviskoses farbloses Uretdionpolyisocyanat mit einem Gehalt an freien NCO-Gruppen von 16,9 %, einem Gehalt an monomerem IPDI von 0,3 % und einer Farbzahl (APHA), bestimmt an einer 10 %-igen Lösung in Methylenchlorid, von 8. Nach ¹³C-NMR-Spektroskopie ist das Produkt frei von Isocyanuratgruppen.

### Beispiel 3

1000 g (4,50 mol) Isophorondiisocyanat (IPDI) werden bei 40°C unter trockenem Stickstoff und Rühren mit einer Lösung von 1,3 g (0,009 mol) Natrium-Benztriazolat (Katalysator 3) in 13 ml Dimethylsulfoxid (DMSO) versetzt, wobei sich das Reaktionsgemisch leicht um 2 bis 3°C erwärmt. Die Exothermie klingt innerhalb von ca. 30 Minuten wieder ab und nach einer Reaktionszeit von 2 Stunden ist der NCO-Gehalt der Reaktionsmischung auf einen Wert von 29,3 %, entsprechend einem Oligomerisierungsgrad von 21,3 %, abgesunken. Der Katalysator wird nun durch Zugabe von 1,9 g (0,009 mol) Dibutylphosphat deaktiviert. Die dabei entstehende Trübung wird abfiltriert und die klare, farblose Reaktionsmischung wie in Beispiel 1 beschrieben von flüchtigen Bestandteilen (überschüssigem Diisocyanat und Katalysatorlösungsmittel) befreit. Man erhält ein hochviskoses hellgelbes Uretdionpolyisocyanat mit einem Gehalt an freien NCO-Gruppen von 16,9 %, einem Gehalt an monomerem IPDI von 0,5 % und einer Farbzahl (APHA), bestimmt an einer 10 %-igen Lösung in Methylenchlorid, von 9. Das molare Verhältnis von Uretdion- zu Isocyanuratstrukturen beträgt nach ¹³C-NMR-Spcktroskopie 94,1 : 5,9.

### Beispiel 4

1000 g (4,50 mol) Isophorondiisocyanat (IPDI) werden 1 Stunde im Vakuum (2 mbar) entgast, anschließend mit trockenem Stickstoff belüftet und auf 40°C erwärmt. Unter Rühren gibt man 2,3 g (5,1 mmol) der Katalysator 4 (Tetrabutylphosphonium-1,2,4-triazolat in Methanol/Isopropanol) zu, wobei sich das Reaktionsgemisch aufgrund der freigesetzten Reaktionswärme bis auf 43°C erwärmt. Nach Abklingen der Exothermie wird nach 35 Minuten mit weiteren 2,3 g (5,1 mmol) Katalysatorlösung nachkatalysiert. Nach einer Reaktionszeit von insgesamt 1 Stunde 10 Minuten beträgt der NCO-Gehalt in der Reaktionsmischung 32,3%, entsprechend einem Oligomerisierungsgrad von 14,2 %. Der Katalysator wird nun durch Zugabe von 2,15 g (10,2 mmol) Dibutylphosphat deaktiviert und das resultierende klare, schwach gelbe Gemisch wie in Beispiel 1 beschrieben durch Dünnschichtdestillation von überschüssigem Diisocyanat befreit. Man erhält ein hochviskoses hellgelbes Uretdionpolyisocyanat mit einem Gehalt an freien NCO-Gruppen von 17,3 %, einem Gehalt an monomerem IPDI von 0,5 % und einer Farbzahl (APHA), bestimmt an einer 10 %-igen Lösung in Methylenchlorid, von 9. Das molare Verhältnis von Uretdion- zu Isocyanuratstrukturen beträgt nach ¹³C-NMR-Spektroskopie 96,1 : 3,9.

### Beispiel 5

1000 g (4,50 mol) Isophorondiisocyanat (IPDI) werden wie in Beispiel 4 beschrieben im Vakuum entgast, mit trockenem Stickstoff belüftet und auf 40°C erwärmt. Unter Rühren gibt man 2,3 g (4,7 mmol) des Katalysators 5 (Tetrabutylphosphonium-1,2,3-triazolat in Methanol/Isopropanol) zu, wobei sich das Reaktionsgemisch aufgrund der freigesetzten Reaktionswärme leicht bis auf 42°C erwärmt. Nach Abklingen der Exothermie wird nach 2 Stunden mit weiteren 2,3 g (4,7 mmol) sowie nach weiteren 55 Minuten noch einmal mit 1,15 g (2,3 mmol) Katalysatorlösung nachkatalysiert. Nach einer Reaktionszeit von insgesamt 5 Stunde 15 Minuten beträgt der NCO-Gehalt in der Reaktionsmischung 29,8 %, entsprechend einem Oligomerisierungsgrad von 20,7 %. Der Katalysator wird nun durch Zugabe von 2,45 g (11,7 mmol) Dibutylphosphat deaktiviert und das resultierende klare, schwach gelbe Gemisch wie in Beispiel 1 beschrieben durch Dünnschichtdestillation von überschüssigem Diisocyanat befreit. Man erhält ein hochviskoses hellgelbes Uretdionpolyisocyanat mit einem Gehalt an freien NCO-Gruppen von 17,3 %, einem Gehalt an monomerem IPDI von 0,5 % und einer Farbzahl (APHA), bestimmt an einer 10 %-igen Lösung in Methylenchlorid, von 8. Das molare Verhältnis von Uretdion- zu Isocyanuratstrukturen beträgt nach ¹³C-NMR-Spektroskopie 94,9 : 5,1.

### Beispiel 6:

1000 g (4,50 mol) Isophorondiisocyanat (IPDI) werden wie in Beispiel 4 beschrieben im Vakuum entgast, mit trockenem Stickstoff belüftet und auf 40°C erwärmt. Unter Rühren gibt man 2,7 g (5,0 mmol) des Katalysators 6 (Tetrabutylphosphonium-Benztriazolat in Methanol/Isopropanol) zu, wobei sich das Reaktionsgemisch aufgrund der freigesetzten Reaktionswärme leicht auf ca. 42°C erwärmt. Nach einer Reaktionszeit von 40 Minuten, während der die Exothermie wieder abklingt, beträgt der NCO-Gehalt in der Reaktionsmischung 31,5 %, entsprechend einem Oligomerisierungsgrad von 16,4 %. Der Katalysator wird nun durch Zugabe von 1,05 g (5,0 mmol) Dibutylphosphat deaktiviert und das resultierende klare, hellgelbe Gemisch wie in Beispiel 1 beschrieben durch Dünnschichtdestillation von überschüssigem Diisocyanat befreit. Man erhält ein hochviskoses gelbes Uretdionpolyisocyanat mit einem Gehalt an freien NCO-Gruppen von 17,0 %, einem Gehalt an monomerem IPDI von 0,3 % und einer Farbzahl (APHA), bestimmt an einer 10 %-igen Lösung in Methylenchlorid, von 11. Das molare Verhältnis von Uretdion- zu Isocyanuratstrukturen beträgt nach ¹³C-NMR-Spektroskopie 92,8 : 7,2.

### Beispiel 7:

1000 g (4,50 mol) Isophorondiisocyanat (IPDI) werden wie in Beispiel 4 beschrieben im Vakuum entgast, mit trockenem Stickstoff belüftet und auf 40°C erwärmt. Unter Rühren gibt man 2,5 g (2,5 mmol) des Katalysators 7 (Benzyltriethylammonium-1,2,4-triazolat in Methanol/2-Ethylhexanol) zu, wobei sich das Reaktionsgemisch aufgrund der freigesetzten Reaktionswärme auf ca. 44°C erwärmt. Nach Abklingen der Exothermie wird dreimal im Abstand von jeweils 45 Minuten mit weiteren 2,5 g (2,5 mmol) Katalysatorlösung nachkatalysiert. Nach einer Reaktionszeit von insgesamt 3 Stunde 10 Minuten beträgt der NCO-Gehalt in der Reaktionsmischung 29,6 %, entsprechend einem Oligomerisierungsgrad von 20,9 %. Der Katalysator wird nun durch Zugabe von 2,10 g (10,0 mmol) Dibutylphosphat deaktiviert und das resultierende klare, gelbe Gemisch wie in Beispiel 1 beschrieben durch Dünnschichtdestillation von überschüssigem Diisocyanat befreit. Man erhält ein hochviskoses hellgelbes Uretdionpolyisocyanat mit einem Gehalt an freien NCO-Gruppen von 17,0 %, einem Gehalt an monomerem IPDI von 0,4 % und einer Farbzahl (APHA), bestimmt an einer 10 %-igen Lösung in Methylenchlorid, von 10. Das molare Verhältnis von Uretdion- zu Isocyanuratstrukturen beträgt nach ¹³C-NMR-Spektroskopie 96,3 : 3,7.

### Beispiel 8:

1000 g (4,50 mol) Isophorondiisocyanat (IPDI) werden wie in Beispiel 4 beschrieben im Vakuum entgast, mit trockenem Stickstoff belüftet und auf 40°C erwärmt. Unter Rühren gibt man 0,8 g (1,8 mmol) des Katalysators 8 (Methyltrioctylammonium-1,2,4-triazolat) zu, wobei sich das Reaktionsgemisch aufgrund der freigesetzten Reaktionswärme auf ca. 42°C erwärmt. Nach einer Reaktionszeit von 45 Minuten, während der die Exothermie wieder abklingt, beträgt der NCO-Gehalt in der Reaktionsmischung 29,7 %, entsprechend einem Oligomerisierungsgrad von 21,4 %. Der Katalysator wird nun durch Zugabe von 0,38 g (1,8 mmol) Dibutylphosphat deaktiviert und das resultierende klare, farblose Gemisch wie in Beispiel 1 beschrieben durch Dünnschichtdestillation von überschüssigem Diisocyanat befreit. Man erhält ein hochviskoses nahezu farbloses Uretdionpolyisocyanat mit einem Gehalt an freien NCO-Gruppen von 16,9 %, einem Gehalt an monomerem IPDI von 0,4 % und einer Farbzahl (APHA), bestimmt an einer 10 %-igen Lösung in Methylenchlorid, von 8. Das molare Verhältnis von Uretdion- zu Isocyanuratstrukturen beträgt nach ¹³C-NMR-Spektroskopie 98,8 : 1,2.

### Vergleichsbeispiel 1 (gemäß EP-A 317 744)

1000 g (4,50 mol) Isophorondiisocyanat (IPDI) werden bei Raumtemperatur unter trockenem Stickstoff und Rühren mit 20 g (2 %) 4-Dimethylaminopyridin (DMAP) als Katalysator versetzt. Nach 20 h wird die hellgelbe Reaktionsmischung, die einen NCO-Gehalt von 28,7 %, entsprechend einem Oligomerisierungsgrad von 22,6 % aufweist, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit. Man erhält ein hochviskoses hellgelbes Uretdionpolyisocyanat mit einem Gehalt an freien NCO-Gruppen von 17,8 %, einem Gehalt an monomerem IPDI von 0,3 % und einer Farbzahl (APHA), bestimmt an einer 10 %-igen Lösung in Methylenchlorid, von 65. Das Produkt ist laut ¹³C-NMR-Spektrum frei von Isocyanuratstrukturen.

### Vergleichsbeispiel 2 (gemäß EP-A 896 973)

1000 g (4,50 mol) Isophorondiisocyanat (IPDI) werden bei Raumtemperatur unter trockenem Stickstoff und Rühren nacheinander mit 10 g (1 %) Triisodecylphosphit als Stabilisator sowie 10 g (1 %) 4-Dimethylaminopyridin (DMAP) als Katalysator versetzt. Nach 20 h wird die hellgelbe Reaktionsmischung, die einen NCO-Gehalt von 30,4 %, entsprechend einem Oligomerisierungsgrad von 18,0 % aufweist, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit. Man erhält ein hochviskoses gelbes Uretdionpolyisocyanat mit einem Gehalt an freien NCO-Gruppen von 17,5 %, einem Gehalt an monomerem IPDI von 0,4 % und einer Farbzahl (APHA), bestimmt an einer 10 %-igen Lösung in Methylenchlorid, von 23.

### Vergleichsbeispiel 3 (nach EP-A 735 027)

1000 g (4,50 mol) Isophorondiisocyanat (IPDI) werden bei Raumtemperatur unter trockenem Stickstoff und Rühren nacheinander mit 20 g (1 %) Triphenylphosphit als Stabilisator sowie 20 g (1 %) 4-Dimethylaminopyridin (DMAP) als Katalysator versetzt. Nach 20 h wird die hellgelbe Reaktionsmischung, die einen NCO-Gehalt von 28,8 %, entsprechend einem Oligomerisierungsgrad von 20,8 % aufweist, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit. Man erhält ein hochviskoses gelb-braunes Uretdionpolyisocyanat mit einem Gehalt an freien NCO-Gruppen von 17,2 %, einem Gehalt an monomerem IPDI von 0,4 % und einer HAZEN-Farbzahl, bestimmt an einer 10 %-igen Lösung in Methylenchlorid, von 47.

Die Vergleichsbeispiele zeigen, dass das erfindungsgemäße Dimerisierungsverfahren erheblich geringere Katalysatormengen benötigt als die bekannten Verfahren des Standes der Technik und dabei Produkt liefert, die eine deutlich niedrigere Farbzahl aufweisen.

### Beispiel 8: Herstellung eines Uretdionpulverlackhärters

### (Verwendung gemäß EP-A 639 598)

350,0 g (1,47 val) des IPDI-Uretdionpolyisocyanates aus Beispiel 1, das nach Heißtitration einen Gehalt an Uretdiongruppen von 19,2 % aufweist, werden unter trockenem Stickstoff vorgelegt und auf 80°C erwärmt. Anschließend gibt man innerhalb von 30 min eine Mischung von 176,0 g (0,88 val) eines handelsüblichen, auf 1,4-Butandiol gestarteten ε-Caprolactonpolyesterdiols mit einer OH-Zahl von 280 mg KOH/g (Capa^{®} 203, Fa. Solvay), 19,8 g (0,44 val) 1,4-Butandiol und 19,5 g (0,15 val) 2-Ethyl-1-hexanol zu und rührt bei einer Reaktionstemperatur von max. 100°C bis der NCO-Gehalt des Reaktionsgemisches nach ca. 4 Stunden auf einen Wert von 0,8 % abgesunken ist. Die Schmelze wird zum Erkalten auf ein Blech gegossen, und man erhält eine als Pulverlackvemetzer geeignete uretdiongruppenhaltige Polyadditionsverbindung in Form eines farblosen Festharzes. Das Produkt weist folgende Kenndaten auf:

| | |
|---|---|
| NCO-Gehalt: | 0,8 % |
| Uretdiongruppen-Gehalt (ber.): | 11,9 % |
| Schmelzpunkt: | 81 - 84°C |

## Patentansprüche

1. Verfahren zur Herstellung Uretdiongruppen aufweisender Polyisocyanate durch Oligomerisierung eines Teils der Isocyanatgruppen von Isophorondiisocyanat in Gegenwart von die Dimerisierung von Isocyanatgruppen beschleunigenden Katalysatoren, gegebenenfalls Abbruch der Oligomerisierungsreaktion bei einem definierten Oligomerisierungsgrad durch Zusatz eines Katalysatorgiftes und gegebenenfalls Entfernung des nicht umgesetzten Diisocyanatüberschusses durch Extraktion oder Dünnschichtdestillation, **dadurch gekennzeichnet, dass** man als Oligomerisierungskatalysatoren salzartige Verbindungen einsetzt, die im Anion von 10 bis 100 Gew.-% 1,2,3-und/oder 1,2,4-Triazolatstrukturen, berechnet als C₂N₃; Molekulargewicht = 66, enthalten.

2. Verfahren gemäß Anspruch 1, **dadurch gekennzeichnet, dass** man als Oligomerisierungskatalysatoren salzartige Verbindungen einsetzt, die im Anion Triazolatstrukturen der allgemeinen Formeln (I) und/oder (II) 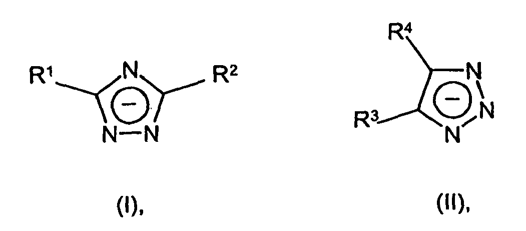 enthalten, in welchen
R¹, R², R³ und R⁴ für gleiche oder verschiedenen Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 20 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten,
und wobei
R³ und R⁴ in Formel (II) auch in Kombination untereinander zusammen mit den Kohlenstoffatomen des 1,2,3-Triazolatfünfriges und gegebenenfalls einem weiteren Stickstoffatom oder einem Sauerstoffatom annelierte Ringe mit 3 bis 6 Kohlenstoffatomen bilden können.

3. Verfahren gemäß Anspruch 1 und 2, **dadurch gekennzeichnet, dass** man als Oligomerisierunskatalysatoren salzartige Verbindungen einsetzt, die im Anion Triazolatstrukturen der allgemeinen Formel (I) enthalten, in welcher
R¹ und R² für gleiche oder verschiedenen Reste stehen und jeweils ein Wasserstoffatom, ein Halogenatom aus der Reihe Fluor, Chlor oder Brom oder eine Nitrogruppe, einen gesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten.

4. Verfahren gemäß Anspruch 1 und 2, **dadurch gekennzeichnet, dass** man als Oligomerisierungskatalysatoren salzartige Verbindungen einsetzt, die im Anion Triazolatstrukturen der allgemeinen Formel (II) enthalten, in welcher
R³ und R⁴ für gleiche oder verschiedenen Reste stehen und jeweils ein
Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten, und auch in Kombination untereinander zusammen mit den Kohlenstoffatomen des 1,2,3-Triazolatfünfriges und gegebenenfalls einem weiteren Stickstoffatom oder einem Sauerstoffatom annelierte Ringe mit 3 bis 6 Kohlenstoffatomen bilden können.

5. Verfahren gemäß Anspruch 1, **dadurch gekennzeichnet, dass** man als Oligomerisierunskatalysatoren Salze des 1,2,4-Triazols, des 1,2,3-Triazols und/oder des 1,2,3-Benztriaizols einsetzt.

6. Verfahren gemäß Anspruch 1 bis 5, **dadurch gekennzeichnet, dass** man Oligomerisierungskatalysatoren einsetzt, die als Kationen Alkaliionen oder einwertige Ammonium- oder Phosphoniumkationen, der allgemeinen Formel (III) 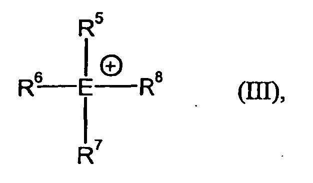 enthalten, in welcher
E für Stickstoff oder Phosphor steht und
R⁵, R⁶, R⁷ und R⁸ für gleiche oder verschiedenen Reste stehen und jeweils einen gesättigten aliphatischen oder cycloaliphatischen, einen gegebenenfalls substituierten aromatischen oder araliphatischen Rest mit bis zu 18 Kohlenstoffatome bedeuten.

## Claims

1. Process for preparing polyisocyanates containing uretdione groups by oligomerizing some of the isocyanate groups of isophorone diisocyanate in the presence of catalysts which accelerate the dimerization of isocyanate groups, optionally breaking off the oligomerization reaction at a defined degree of oligomerization by adding a catalyst poison, and optionally removing the unreacted diisocyanate excess by extraction or thin-film distillation, **characterized in that** oligomerization catalysts used comprise saltlike compounds containing from 10 to 100% by weight of 1,2,3- and/or 1,2,4-triazolate structures, calculated as C₂N₃; molecular weight = 66, in the anion.

2. Process of Claim 1, **characterized in that** oligomerization catalysts used comprise saltlike compounds containing in the anion triazolate structures of the general formulae (I) and/or (II) 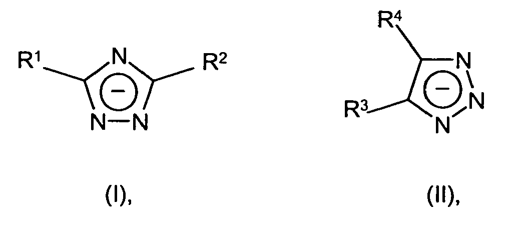 in which
R¹, R², R³, and R⁴ represent identical or different radicals and each denote a hydrogen atom, a halogen atom from the series fluorine, chlorine or bromine or a nitro group, a saturated or unsaturated aliphatic or cycloaliphatic radical or an optionally substituted aromatic or araliphatic radical which can contain up to 20 carbon atoms and optionally up to 3 heteroatoms from the oxygen, sulfur, nitrogen series and optionally can be substituted by halogen atoms or nitro groups,
and where
R³ and R⁴ in formula (II) may also form in combination with one another, together with the carbon atoms of the five-membered 1,2,3-triazolate ring and optionally a further nitrogen atom or an oxygen atom, fused rings having 3 to 6 carbon atoms.

3. Process of Claim 1 and 2, **characterized in that** oligomerization catalysts used comprise saltlike compounds containing in the anion triazolate structures of the general formula (I) in which
R¹ and R² represent identical or different radicals and each denote a hydrogen atom, a halogen atom from the series fluorine, chlorine or bromine or a nitro group, a saturated aliphatic or cycloaliphatic radical or an optionally substituted aromatic or araliphatic radical which can contain up to 12 carbon atoms and optionally up to 3 heteroatoms from the oxygen, sulfur, nitrogen series and optionally can be substituted by halogen atoms or nitro groups.

4. Process of Claim 1 and 2, **characterized in that** oligomerization catalysts used comprise saltlike compounds containing in the anion triazolate structures of the general formula (II) in which
R³ and R⁴ represent identical or different radicals and each denote a hydrogen atom, a halogen atom from the series fluorine, chlorine or bromine or a nitro group, a saturated or unsaturated aliphatic or cycloaliphatic radical or an optionally substituted aromatic or araliphatic radical which can contain up to 12 carbon atoms and optionally up to 3 heteroatoms from the oxygen, sulfur, nitrogen series and optionally can be substituted by halogen atoms or nitro groups, and can also form in combination with one another, together with the carbon atoms of the five-membered 1,2,3-triazolate ring and optionally a further nitrogen atom or an oxygen atom, fused rings having 3 to 6 carbon atoms.

5. Process of Claim 1, **characterized in that** oligomerization catalysts used comprise salts of 1,2,4-triazole, of 1,2,3-triazole and/or of 1,2,3-benzotriazole.

6. Process of Claim 1 to 5, **characterized in that** oligomerization catalysts used contain as cations alkali metal ions or monovalent ammonium or phosphonium cations, of the general formula (III) 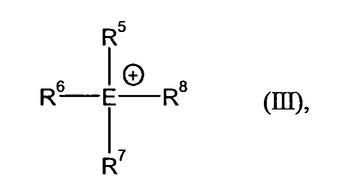 in which
E represents nitrogen or phosphorus and
R⁵, R⁶, R⁷, and R⁸ represent identical or different radicals and each denote a saturated aliphatic or cycloaliphatic radical or an
optionally substituted aromatic or araliphatic radical having up to 18 carbon atoms.

## Revendications

1. Procédé de préparation de polyisocyanates présentant des groupes uretdione, par oligomérisation d'une partie des groupes isocyanate du diisocyanate d'isophorone en présence de catalyseurs accélérant la dimérisation des groupes isocyanate, le cas échéant, arrêt de la réaction d'oligomérisation à un degré d'oligomérisation défini par addition d'un poison de catalyseur et le cas échéant, élimination de l'excès de diisocyanate non entré en réaction par extraction ou distillation en couche mince, **caractérisé en ce que** l'on utilise comme catalyseurs d'oligomérisation des composés salins qui contiennent dans l'anion de 10 à 100 % en poids de structures 1,2,3- et/ou 1,2,4-triazolate, calculées comme C₂N₃; poids moléculaire = 66.

2. Procédé selon la revendication 1, **caractérisé en ce que** l'on met en oeuvre comme catalyseurs d'oligomérisation des composés salins qui contiennent dans l'anion des structures triazolate des formules générales (I) et/ou (II) 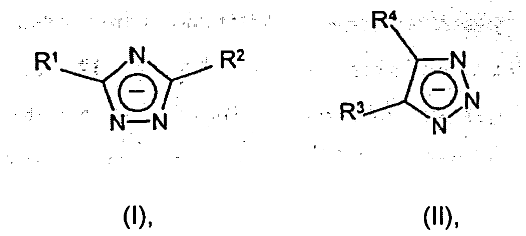 dans lesquelles
R¹, R², R³ et R⁴ représentent des radicaux égaux ou différents et chacun un atome d'hydrogène, un atome d'halogène de la série du fluor, du chlore ou du brome, ou un groupe nitro, un radical aliphatique ou cycloaliphatique saturé ou insaturé, un radical aromatique ou araliphatique le cas échéant substitué, qui contient jusqu'à 20 atomes de carbone et, le cas échéant, jusqu'à 3 hétéroatomes de la série de l'oxygène, du soufre et de l'azote et qui peut être substitué, le cas échéant, par des atomes d'halogène ou des groupes nitro,
et où
R₃ et R₄ dans la formule (II) peuvent également former en combinaison entre eux avec les atomes de carbone du noyau pentagonal du 1,2,3-triazolate et le cas échéant un autre atome d'azote ou un atome d'oxygène des noyaux accolés comportant 3 à 6 atomes de carbone.

3. Procédé selon la revendication 1 et 2, **caractérisé en ce que** l'on met en oeuvre comme catalyseurs d'oligomérisation des composés salins qui contiennent dans l'anion des structures triazolate de la formule générale (I), dans laquelle
R¹ et R² représentent des radicaux égaux ou différents et chacun un atome d'hydrogène, un atome d'halogène de la série du fluor, du chlore ou du brome, ou un groupe nitro, un radical aliphatique ou cycloaliphatique saturé, un radical aromatique ou araliphatique le cas échéant substitué, qui contient jusqu'à 12 atomes de carbone et, le cas échéant, jusqu'à 3 hétéroatomes de la série de l'oxygène, du soufre et de l'azote et qui peut être substitué, le cas échéant, par des atomes d'halogène ou des groupes nitro.

4. Procédé selon les revendications 1 et 2, **caractérisé en ce que** l'on met en oeuvre comme catalyseurs d'oligomérisation des composés salins qui contiennent dans l'anion des structures triazolate de la formule générale (II), dans laquelle
R³ et R⁴ représentent des radicaux égaux ou différents et chacun un atome d'hydrogène, un atome d'halogène de la série du fluor, du chlore ou du brome, ou un groupe nitro, un radical aliphatique ou cycloaliphatique saturé ou insaturé, un radical aromatique ou araliphatique le cas échéant substitué, qui contient jusqu'à 12 atomes de carbone et, le cas échéant, jusqu'à 3 hétéroatomes de la série de l'oxygène, du soufre et de l'azote et qui peut être substitué, le cas échéant, par des atomes d'halogène ou des groupes nitro, et pouvant également former en combinaison entre eux avec les atomes de carbone du noyau pentagonal du 1,2,3-triazolate et le cas échéant un autre atome
d'azote ou un atome d'oxygène des noyaux accolés comportant 3 à 6 atomes de carbone.

5. Procédé selon là revendication 1, **caractérisé en ce que** l'on met en oeuvre comme catalyseurs d'oligomérisation des sels du 1,2,4-triazole, du 1,2,3-triazole et/ou du 1,2,3-benzotriazole.

6. Procédé selon la revendication 1 à 5, **caractérisé en ce que** l'on met en oeuvre des catalyseurs d'oligomérisation qui contiennent comme cations des ions de métaux alcalins ou des cations monovalents d'ammonium ou de phosphonium de la formule générale (III), 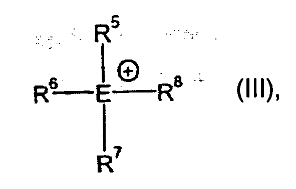 dans laquelle
E représente l'azote ou le phosphore et
R⁵, R⁶, R⁷ et R⁸ représentent des radicaux égaux ou différents et chacun un radical aliphatique ou cycloaliphatique saturé, ou un radical aromatique ou araliphatique le cas échéant substitué comportant jusqu'à 18 atomes de carbone.
